(19) Europäisches Patentamt / European Patent Office / Office européen des brevets

(11) **EP 3 953 142 B1**

(12) # EUROPEAN PATENT SPECIFICATION

(45) Date of publication and mention
of the grant of the patent:
**05.04.2023 Bulletin 2023/14**

(21) Application number: **20745332.5**

(22) Date of filing: **24.04.2020**

(51) International Patent Classification (IPC):
**B29C 51/32** (2006.01) **B29C 51/26** (2006.01)
**B29C 51/30** (2006.01) **B26F 1/38** (2006.01)
**B29C 51/04** (2006.01) **B29L 31/00** (2006.01)
**B29L 23/18** (2006.01) **B26F 1/44** (2006.01)
**B26D 1/00** (2006.01)

(52) Cooperative Patent Classification (CPC):
**B29C 51/262; B26F 1/40; B26F 1/44; B29C 51/30;**
**B29C 51/32;** B26D 2001/0053; B26F 2001/4427;
B26F 2001/4472; B26F 2210/06; B29C 48/29;
B29C 51/04; B29C 51/266; B29C 2793/0009;
B29C 2793/0054; B29C 2793/0081; (Cont.)

(86) International application number:
**PCT/RO2020/050004**

(87) International publication number:
**WO 2020/218934 (29.10.2020 Gazette 2020/44)**

(54) **MULTI-CAVITY MOULD WITH A KNIFE PRESSURE-BOX FOR A THERMOFORMING MACHINE USED IN THE PROCESS OF HIGH-VOLUME, CONTINUOUS THERMOFORMING OF THIN-GAUGE PLASTIC PRODUCTS**

MEHRKAMMERFORM MIT EINER MESSERDRUCKBOX FÜR EINE THERMOFORMMASCHINE, DIE IM PROZESS DER HOCHVOLUMIGEN KONTINUIERLICHEN THERMOFORMUNG VON DÜNNWANDIGEN KUNSTSTOFFPRODUKTEN VERWENDET WIRD

MOULE À CAVITÉS MULTIPLES POURVU D'UNE BOÎTE DE PRESSION DE COUTEAU POUR UNE MACHINE DE THERMOFORMAGE UTILISÉE DANS LE PROCÉDÉ DE THERMOFORMAGE EN CONTINU DE PRODUITS EN PLASTIQUE DE FAIBLE ÉPAISSEUR EN GRANDE QUANTITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MD**

(30) Priority: **24.04.2019 PCT/RO2019/000014**

(43) Date of publication of application:
**16.02.2022 Bulletin 2022/07**

(73) Proprietor: **Dragulinescu, Ionel-Dan Câmpulung, Jud. Arges (RO)**

(72) Inventor: **Dragulinescu, Ionel-Dan Câmpulung, Jud. Arges (RO)**

(74) Representative: **Fierascu, Cosmina-Catrinel et al Rominvent SA**
**35 Ermil Pangratti Street**
**Sector 1**
**011882 Bucharest (RO)**

(56) References cited:
**EP-B1- 1 142 691** **CN-A- 105 383 049**
**US-A1- 2015 353 224**

(52) Cooperative Patent Classification (CPC): (Cont.)
B29L 2031/7132

**Description**

**Field of the invention**

The present invention relates generally to the field of machines which thermoform thin-gauge plastic sheet material into various parts and/or products and particularly to a multi-cavity mould with a knife pressure-box included as a part of the thermoforming machine used in the process of high-volume, continuous thermoforming of thin-gauge plastic products, for example in the Form/Cut/Stack thermoforming machines with multi-cavity mould.

**Background of the invention**

The thermoforming process is widely used in the packaging industry to make various products from sheets (sometimes referred to as "films") of thermoplastic material, which is a substance (especially synthetic plastic or resin) becoming soft and moldable when subjected to heat and regaining its solid state when cooling, without appreciable change of properties.

CN105383049A and EP1142691 B1 disclose multi-cavity moulds in accordance with the preamble of claim 1 and corresponding apparatuses comprising the multi-cavity moulds.

The thermoforming process (also known as "thermoforming cycle") is a manufacturing process for thermoplastic sheet or film. Specifically, it is more of a converting process, where thermoplastic sheet or film is converted into a formed, finished part. The sheet or film is heated in an oven to its forming temperature, then stretched into or onto a mould, whose shape it takes and then cooled. Depending on the application, the thermoforming process uses thin-gauge or thick-gauge sheets of thermoplastic material. Thin-gauge films are used to manufacturing trays, containers, disposable cups, blisters, etc. They have wide applications in the food, fast moving consumer goods, and medical industries. The thin-gauge thermoplastic films are usually wrapped up on a reel of cardboard and have a thickness (A) between 0.2 and 2 mm. The known thermoplastic materials used are: Polypropylene (PP), Polyvinyl chloride (PVC), Polystyrene (PS), Oriented Polystyrene (OPS), Polyethylene terephthalate (PET), Poly(lactic acid) or polylactic acid or polylactide (PLA), Crystalline Polyethylene Terephthalate (CPET), various combinations like Polypropylene/Ethylene vinyl alcohol/Polypropylene (PP/EVOH/PP), Polypropylene/Polyethylene or polythene (PP/PE), Polyethylene terephthalate/ Polyethylene or polythene (PET/PE) and the combinations thereof.

During the thermoforming process of thin-gauge plastic products, the thin-gauge thermoplastic film is fed through the thermoforming machine, either continuously from a roll or in cut sheets and is subsequently heated to allow forming of the plastic, shaped in moulds (which can be plug moulds or cavity moulds) to produce the shapes of the various desired parts or products, then cooled and trimmed to separate the parts/products from the surrounding scrap sheet/film (sometimes referred to as "web").

Thermoforming machines typically include:

- an oven or heating station, in which the thermoplastic sheet of material is heated to the forming temperature so that it may be stretched into or onto a mould;
- a forming station in which the heated plastic is formed into the desired shapes by mould portions which engage with one another;
- a trim or cutting station where the formed parts/products are cut or separated from the web and
- a stacker station where the separated parts/products resulting from the cutting station are stacked and transported to the packing station.

There are three known thermoforming methods, differing in the technique used for the forming stage: vacuum, pressure and mechanical thermoforming (or combined).

Also, different thermoforming machines are known, which use the techniques mentioned above. The preferred thermoforming machines used in the process of high-volume, continuous thermoforming of thin-gauge plastic products are the Form/Cut/Stack and In-Mould-Cut thermoforming machines.

In the Form/Cut/Stack thermoforming machine, the forming and cutting operations are accomplished in separate stations, in different subassemblies of the thermoforming machine and the desired geometry is accomplished with or without the benefit of a mechanical plug assist (i.e. a mechanical device used to aid or assist sheet stretching prior to total contact with the mould).

The remaining portion of the sheet from which the parts/products have been cut - commonly known as "skeleton" or "web" - is waste material and is discarded, recycled or is sold as scrap plastic.

The plastic thermoforming moulds for a thermoforming machine usually comprise one pair of complementary tools in which: male (also known as "plug moulds" or "positive moulds") and female (also known as "cavity moulds" or "negative moulds") are provided. The cavity moulds are placed in cavities provided inside one of the moulding tool's main body. The term "cavity", used in the thermoforming technical field, refers to an empty space or to a hole inside a main body of a moulding tool where the cavity moulds are inserted. With male moulds, the thermoplastic sheet is formed over the surface of the male mould. With female moulds, the thermoplastic sheet is formed inside of the female mould's surface. Male moulds are used when the inside dimensions of the plastic part are a priority. Female moulds are used when the part's or product's outer dimensions are more important than its inner dimensions. A female mould can produce highly detailed parts/products. With female moulds, the inside of the mould surface usually produces the exterior surface of the finished parts/products. This supports the creation of sharp corners and moulded-in features such as logos, ribbing, and recesses for name plates which is particularly important in the packaging industry. Depending on the part/product, the inside corners of a female mould may be relatively tight.

For the packaging industry, since a production quantity of several million or more products can be forecasted, the number of cavities of a mould is increased from one cavity to usually 12, 24 or even 64 cavities, thereby reducing the production costs per a single thermoforming cycle. Multi-cavity moulds can be extremely cost effective and can provide enormous capacity for the manufacturer; however, they come with some degree of risk. The tool design must be able to provide uniform processing conditions at each cavity and less plastic scrap or waste material at the end of a thermoforming production cycle.

Conventional thermoforming machines with multi-cavity mould produce two or more identical parts/products at one press stroke. The formed identical parts/products are then trimmed individually from the sheet of plastic material leaving a skeleton of scrap material which has to be discarded or recycled. This is due to the spaced-apart layout of the cavities inside a multi-cavity mould. Usually, the standard distance between adjacent cavity moulds is of 12 - 40 mm. This is due to the configuration of a supporting block (i.e. a metal block, typically of a rectangular shape, which extends perpendicularly from a base plate inside the main body of a mould, over a predetermined total height, situated between adjacent cavities). This supporting block has to confer increased rigidity to the tool's main block and to the cavity moulds, as well as high mechanical resistance during the thermoforming process at multiple press strokes. Therefore, the standard minimum distance between adjacent cavity moulds is of 12 mm to ensure an increased rigidity and mechanical resistance of the supporting block. Thus, a considerable amount of unformed plastic material remains between the edges of the parts/products formed as well as between the edges of the parts/products formed and the surrounding plastic sheet margins. Also, the minimum distance between adjacent cavity moulds is of 12 mm to ensure adequate space for the configuration of the ventilation channels inside the mould; The ventilation channels are vent holes around the periphery of the cavity moulds and in areas requiring crisp detail; these channels are so small that they do not deform the plastic material which will line the cavity mould during moulding, but at the same time are large enough to permit the trapped air to escape from the cavity mould. Other reasons to maintain a minimum distance of 12 mm between adjacent cavity moulds are:

- to allow for an easy transport of the formed/trimmed products by using the unformed plastic material between adjacent products (the formed and then trimmed thin-gauge plastic products remain attached to the thermoplastic sheet via tiny precise notches (also called "nicks") to be easily transported to the next station);

- adequate space for cooling circuits (usually water-cooling circuits) for the formed parts/products inside the cavity moulds; The cooling circuits are straight cooling channels within the mould, which serve to cool and harden the part/product in contact with the cavity mould;

- to ensure an easy trimming of the formed parts/products inside the thermoplastic sheet (only on the top contour of the formed product).

The main disadvantage of the conventional thermoforming mould is that it generates a substantially large amount of scrap material that needs to be stored, discarded or recycled at additional cost. The scrap percentage is usually around 20% to 50%. Most thermoforming companies recycle their plastic scrap material. Frequently this is converted back into extruded sheet for forming again. This recycling process decreases the efficiency of the thermoforming process by increasing the production lead time of finished parts/products per $m^2$ of plastic sheet material. Another oft-forgotten fact about recycling is that the recovered material degrades in quality.

Also, in the conventional Form/Cut/Stack thermoforming machines, the thermoplastic sheet of material is clamped in a frame attached to the mould and heated. Pressurized air in a pressure box above the thermoplastic sheet presses the sheet against the mould and forces the sheet to follow the contour of the mould. Vacuum is applied from the bottom of the mould to assist the forming process. The pressure and vacuum pushes and pull the sheet against the mold. Optionally a plug assist is used to further press the thermoplastic sheet inside the mould. The heated thermoplastic sheet stretches and takes the shape of the mould.

The moulded thermoplastic sheet cools below its softening temperature, stiffens and retains its moulded shape. The cooled thermoplastic sheet and the pressure box separate and enable the formed product to be removed from the mould for further cooling and subsequent processing like trimming and stacking.

The Form/Cut/Stack thermoforming machine performs the thermoforming process on a continuous length of thermoplastic sheet. The sheet is indexed horizontally through the machine by means of pin chains disposed at either side of the sheet and engaging the sheet. Work stations are sequentially arranged along the machine. Operations are performed on portions of the stationary thermoplastic sheet at each forming, cutting and stacking workstation.

Pressure forming requires a safely designed pressure box component that completely encloses the mould; a pressure of 15 psi (103 kPa) or higher is introduced through this pressure box. Plug assist and other auxiliary devices may be used to distribute the thermoplastic sheet more uniformly before the pressure is initiated. The forming workstation usually includes a rectangular pressure box that seals the heated thermoplastic sheet against a frame surrounding the moulding surface. This frame is called the "clamping frame" of the pressure box and its role is to entrap the thermoplastic sheet of material to ensure consistent forming conditions. The clamping frame securely grips the sheet of material before the plugs start to enter the cavity moulds.

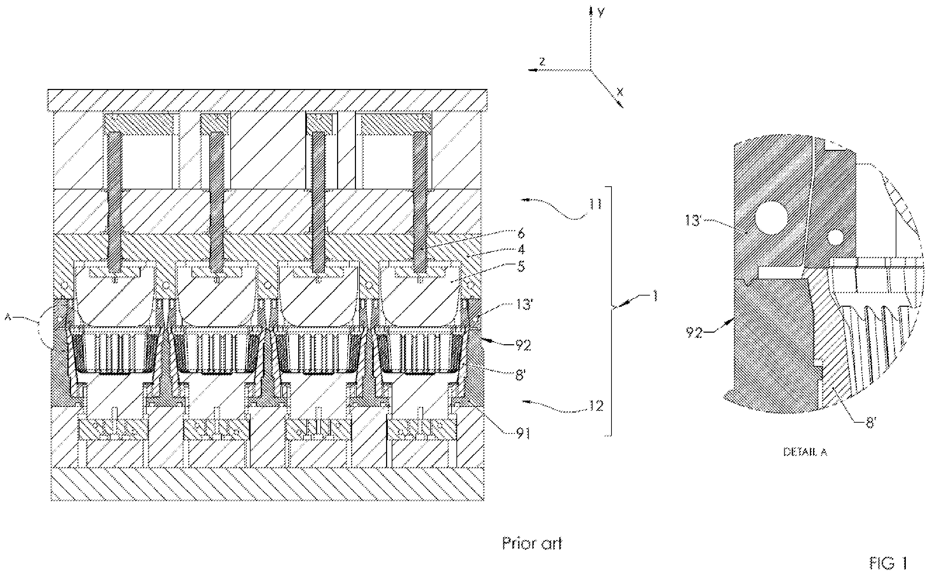

The conventional rectangular pressure box (13') comprises a horizontal top plate, two side bars and two end bars extending orthogonally from a lower surface of the horizontal top plate and connected (usually by means of a plurality of fasteners) such as to define a downwardly open rectangular parallelepiped chamber. The conventional pressure boxes (13') are usually made from metal, preferably aluminum-copper alloys often called Duralumin. Each side and end bars of the pressure box carries a male-female sealing feature or a resilient gasket portion disposed around their lower edges to form an air tight seal between the pressure box and the thermoplastic sheet. The side and end bars of the pressure box compress the thermoplastic sheet against the frame. The male-female sealing feature comprises a prominence at a downwardly projecting end of the side and/or end bars of the pressure box which engages a correspondent recess provided in the lower tool or, as the case may be, in the upper tool of the mould to form the air tight seal (as seen in Fig 1). When resilient gasket portions are used, each gasket portion presses against the flat outer edge of the mould. The seals on the upstream and downstream sides of the mould extend across the width of the thermoplastic sheet. Each gasket is sufficiently thick to deform and conform to the shape of the mould. However, the gaskets are not uniformly compressed. The highly compressed portions of the gaskets fail quickly and limit gasket life (also due to mechanical friction with the sheet, and also because forming air sometimes is engaged before the pressure box is fully closed, therefore damaging the gasket). Furthermore, the gaskets shear or peel away from the bottom of the pressure box. Production is lost because the machine must be stopped to replace failed gaskets. Thus, male-female sealing feature is preferred. However, the thickness of the side and end bars is usually from 15 to 25 mm and needs additional features such as water-cooling channels inside the pressure box frame to cool it. It's important that during the pressure forming process a consistent temperature is maintained. Without cooling, the mould would heat up during the pressure forming process, as it came into contact with more and more sheets of heated thermoplastic material (during each cycle). This would require waiting for the mould to cool between the moulding of each part/product, and significantly slow the manufacturing process.

The main disadvantage of this conventional pressure box (13') with male-female sealing feature is the bulky construction which contributes to the overall increase of the external dimensions of a mould. Also, the final mould size is dictated by the following factors:

- perimeter allowance for pressure box walls (usually having a thickness from 15 to 25 mm) and sufficient edge distance from the chain rail;
- sufficient space for mounting assist devices in the pressure box and water-cooled stripper plates for the mould cavities;
- space required for other devices such as index nubs and/or indexing guides through a die. Therefore, the thermoplastic sheet will be clamped on a large surface which will lead to a large amount of scrap material and the efficiency of the thermoforming machine will be decreased. Also, the increased size of the mould means higher construction costs for the thermoforming machine.

Efficient and cost-effective thermoforming machines with multi-cavity mould that address these conventional inefficiencies are therefore needed.

**Summary of the invention**

The present invention provides a solution to the above-mentioned inherent problems associated with the known thermoforming machines with multi-cavity mould having a conventional pressure box. The main objective technical problem is how to improve the efficiency of a thermoforming process while producing the most finished parts/products per $m^2$ of plastic sheet material and maintaining a reduced scrap rate.

The main purpose of the present invention is to remedy the above-mentioned drawbacks of the prior art by disclosing a multi-cavity mould for a thermoforming machine that can form a series of parts/products in a row/a column or multiple rows/columns while reducing the surface of the thermoplastic sheet that is clamped in the frame of the pressure box and thus reducing the scrap rate and gaining extra 2% to 5% efficiency compared to the conventional Form/Cut/Stack thermoforming machines with multi-cavity mould having a conventional pressure box.

This purpose is achieved in accordance with the invention having the characteristics of the independent claim 1.

Advantageous embodiments of the invention will appear from the dependent claims.

The multi-cavity mould of the invention for a thermoforming machine used in the process of high-volume, continuous thermoforming of a plurality of thin-gauge plastic products from a preheated thin-gauge thermoplastic sheet according to the independent claim 1 comprises:

- an upper tool and a lower tool arranged in a cooperating manner; the lower tool comprising:

- a plurality of cavities for receiving cavity moulds and
- a plurality of base plates from which a plurality of supporting blocks extend perpendicularly over a predetermined total height, situated between adjacent cavities and the upper tool comprising:

  - a top base plate and
  - a plurality of plug moulds arranged in an x-z array and connected in a translational manner to said top base plate by means of driving rods such that said plug moulds are movable in a direction perpendicular to a transport direction of said preheated thin-gauge thermoplastic sheet

**characterized in that**

said upper tool further comprises a knife pressure box comprising:

- a horizontal top plate connected to said top base plate;
- first and second vertical end plates extending orthogonally downwardly from a lower surface of said horizontal top plate,
- first and second vertical side plates extending orthogonally downwardly from said lower surface of said horizontal top plate wherein

the first and second end plates and the first and second side plates are connected such that the horizontal top plate, the first and second end plates and the first and second side plates form a downwardly open rectangular parallelepiped enclosure; the first and second end plates and the first and second side plates are made from tool steel with a thickness measured from 6.35 mm to 10 mm and have a cutting surface defined along an orthogonally downwardly projecting end of said end and side plates wherein

- said cutting surface has a substantially V-shaped profile comprising a micro flat face with a width from 0.02 mm to 0.1 mm and is positioned such that when said knife pressure box is pressed against the preheated thin-gauge thermoplastic sheet, the cutting surface partially penetrates the preheated thin-gauge thermoplastic sheet in order to form a seal around the knife pressure box by pressing a zone of said thermoplastic sheet which was partially trimmed and which is situated inside the rectangular parallelepiped enclosure against the cutting surface.

**Brief description of the drawings**

Fig 1 depicts a detailed front view in a vertical cross section of a conventional forming station of a Form/Cut/Stack mould with a conventional pressure box;
Fig 2 depicts a detailed front view in a vertical cross section of a conventional supporting block of a multi-cavity mould;
Fig 3 depicts a perspective view of an embodiment of a knife pressure box according to the present invention;
Fig 4 depicts a detailed front view in a vertical cross section of an embodiment of an orthogonally downwardly projecting end of a side/end plate of a knife pressure box according to the present invention;
Fig 5 depicts a detailed front view in a vertical cross section of an embodiment of an orthogonally downwardly projecting end of a side/end plate of a knife pressure box according to the present invention and the process of sealing the thermoplastic sheet of material on the interior surfaces of the cutting surface during use;
Fig 6 depicts a detailed front view in a vertical cross section of an embodiment of a side/end plate fastened to the horizontal top plate of a knife pressure box according to the present invention;
Fig 7 depicts a detailed front view in a vertical cross section of an embodiment of a supporting block of a multi-cavity mould in accordance with the present invention;
Fig. 8 depicts a detailed front view in a vertical cross section of an embodiment of the top zone of a supporting block of a multi-cavity mould in accordance with the present invention;
Fig 9 depicts a detailed front view in a vertical cross section of an embodiment of a forming station of a Form/Cut/Stack mould with a knife pressure box according to the present invention;
Fig 10 depicts a perspective view of an embodiment of a forming station of a Form/Cut/Stack mould in accordance with the present invention;
Fig 11 depicts a detailed perspective view of adjacent cavity moulds having a common-edge in accordance with the present invention.

**Detailed description of embodiments of the invention**

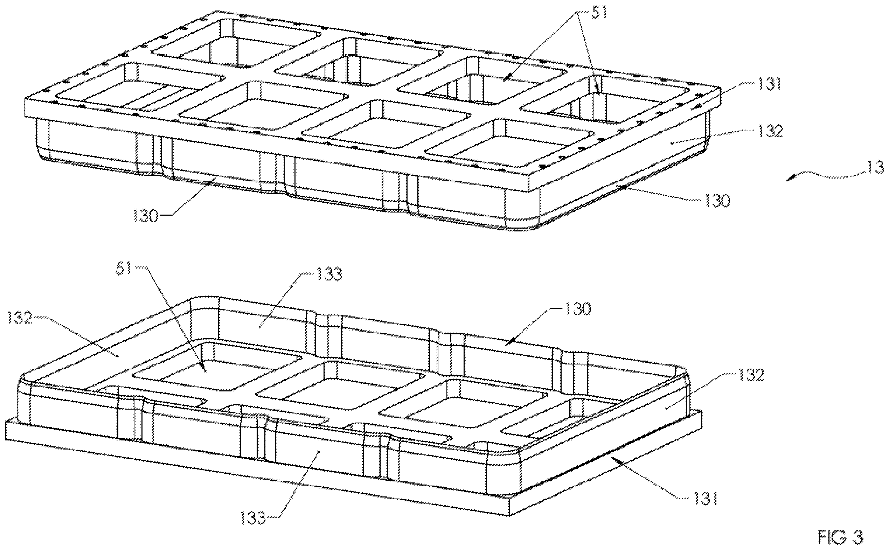

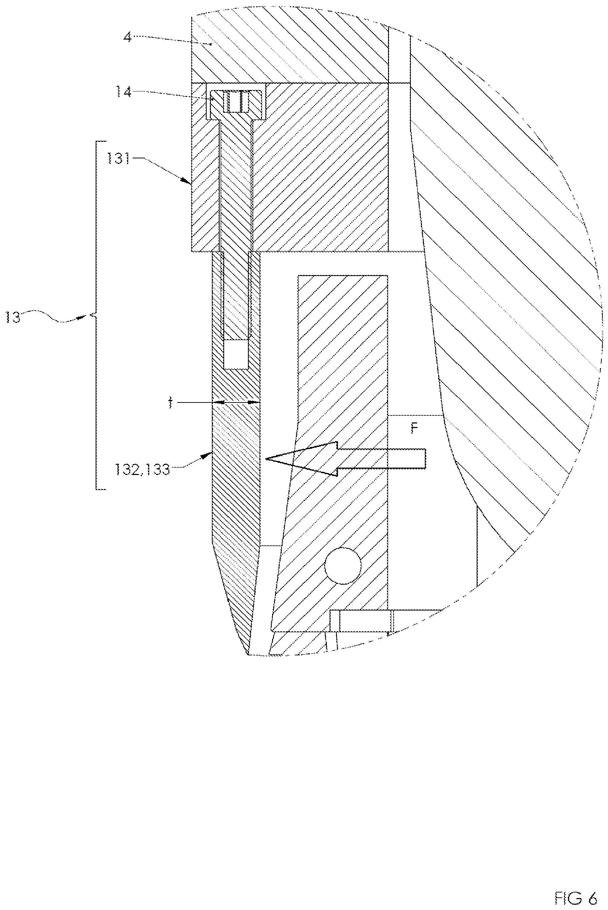

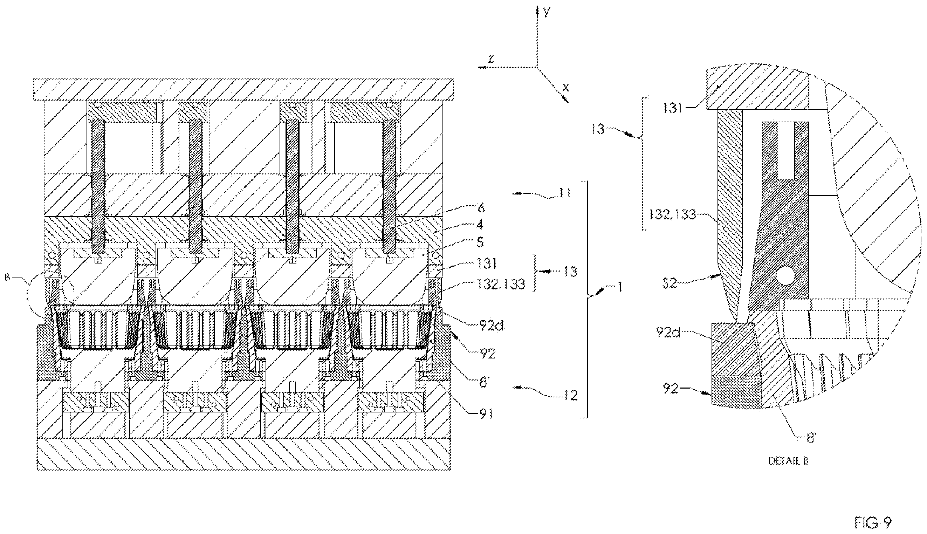

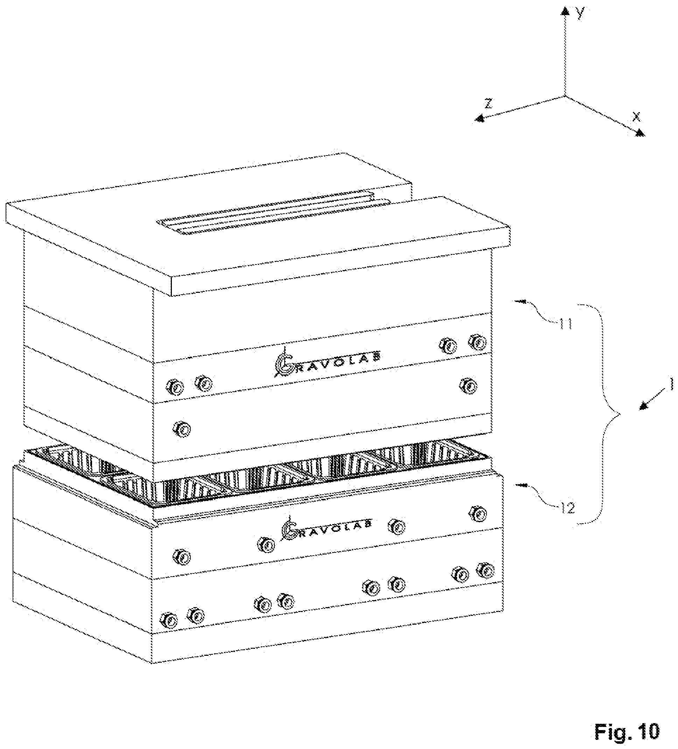

In the following detailed description, reference is made to the accompanying drawings that form a part hereof, and which only have an illustrative, not limiting value.
With reference to Figs. 3 to 11, a multi-cavity mould (1) for a thermoforming machine used in the process of high-volume, continuous thermoforming of a plurality of thin-gauge plastic products (2) from a preheated thin-gauge thermoplastic sheet (3) according to the present invention is disclosed comprising an upper tool (11) and a lower tool (12) arranged in a cooperating manner to simultaneously form and/or sever a plurality of thin-gauge plastic products (2).

The lower tool (12) comprises a plurality of cavities (8) arranged in a x-z array, in which cavity moulds (8') may be placed. The lower tool (12) further comprises a plurality of base plates (91) from which a plurality of supporting blocks (92) extend perpendicularly over a predetermined total height (a), situated between adjacent cavities (8). Preferably, the base plates (91), the supporting blocks (92) and the cavity moulds (8') are made of an Aluminum alloy selected from a group consisting of 5083, 6082 or 7075 Aluminum alloys. These are known for their low density (the overall weight of a mould is therefore lower and can be easily transported), higher strength when compared to steel, relatively soft, ductile and easily workable under normal temperature. The tensile strength of these Aluminum alloys is higher than aluminum. The electrical and heat conductivity is less than that of pure aluminum and more than that of steel (the mould can have a relatively constant temperature in its entire groundmass). These can be easily forged, casted and worked with respect to their low melting point, especially on numerically controlled tools.

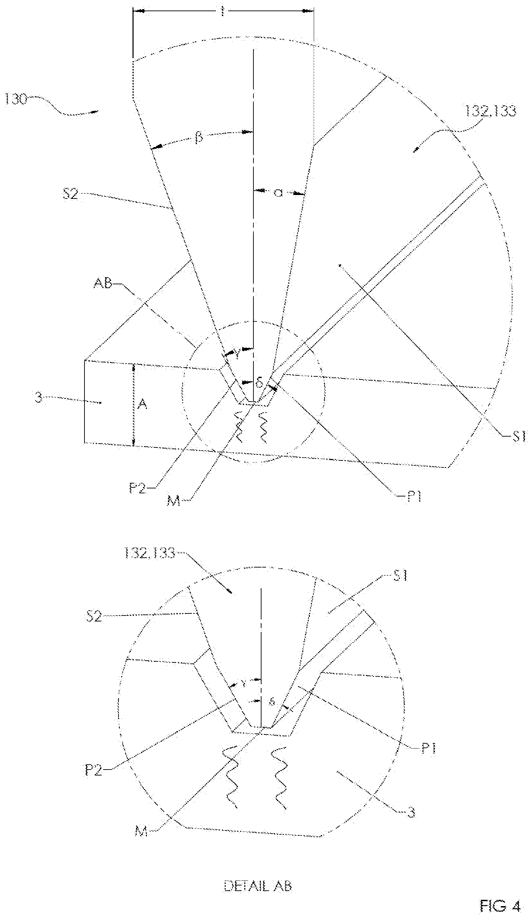

Referring to figs. 4-5, the upper tool (11) comprises a top base plate (4) and a plurality of plug moulds (5) arranged in an x-z array. The plug moulds (5) are connected to the top base plate (4) in a translational manner by means of driving rods (6) in such a way that the plug moulds (5) can move in a direction (y) perpendicular to a transport direction (x) of the preheated thin-gauge thermoplastic sheet (3) placed between the upper tool (11) and the lower tool (12).

The upper tool (11) further comprises a knife pressure box (13) according to the present invention (figs. 3-6 and 9). The knife pressure box (13) comprises a horizontal top plate (131) which is connected to the top base plate (4) and which is preferably made from a medium carbon steel, more preferably C45 (W1.0503) with a hardness of about 55 HRC. This type of steel is a medium strength steel with good machinability, wear resistance and excellent tensile properties.

The horizontal top plate (131) forms together with two vertical end plates (132) and with two vertical side plates (133) which are extending orthogonally downwardly from a lower surface of the horizontal top plate (131), a downwardly open rectangular parallelepiped enclosure. The end and side plates (132, 133) have an orthogonally downwardly projecting end defined along their longitudinal edge which is oriented towards the thermoplastic sheet (3). The side and end plates (132, 133) are made from tool steel with a thickness (t) measured from 6.35 mm to 10 mm. Preferably, the end and side plates (132, 133) are made from the same material, preferably a high Carbon, high chromium cold work tool steel, more preferably selected from a group consisting of X210Cr12(W1.2080), X155CrMoV12(W1.2379) with a hardness of about 54 to 56 HRC. X210Cr12(W1.2080) can attain a slightly higher hardness compared to X155CrMoV12(W1.2379), it displays excellent abrasion/wear resistance and has good dimensional stability and high compressive strength. X155CrMoV12(W1.2379) offers good wear resistance and high compressive strength. These types of tool steel can be quenched and sharpened. The end and side plates (132, 133) are connected to the horizontal top plate (131) preferably by fastening means (14). Preferably, the end and side plates (132, 133) have an equal thickness (t) of about 6.35 mm. This assures enough space for the fastening means (14) which may be screws of M4 or M5 type and also the thickness (t) of the pressure box (13) walls is reduced to a minimum, which is one of the aims of the present invention as mentioned above.

The horizontal top plate (131) may comprise, in case a plug assist is used, a plurality of window cut-outs (51) arranged in an x-z array (fig. 3). These window cut-outs (51) are dimensioned and positioned such as, during use, each plug mould (5) of the plurality of plug moulds (5) passes through a corresponding window cut-out (51) of the plurality of window cut-outs (51). These window cut-outs (51) reinforces the knife pressure box's (13) frame and prevents buckling of the frame during the forming process.

Further, the end and side plates (132, 133) have a cutting surface (130) which is defined along their orthogonally downwardly projecting end. The cutting surface (130) has a substantially V-shaped profile comprising a micro flat face (M) with a width from 0.02 mm to 0.1 mm which during use, initiates penetration of the preheated thin-gauge thermoplastic sheet (3), meaning that it is the first component of the cutting surface (130) to contact the surface of the preheated sheet (3).

Referring to fig.4, the cutting surface (130) V-shaped profile may comprise two primary faces (P1, P2) namely, an interior primary face (P1) oriented towards the interior of the knife pressure box (13) enclosure and an exterior primary face (P2) oriented towards the exterior of the knife pressure box (13) enclosure. The interior primary face (P1) forms a first cutting angle ($\delta$) with a plane perpendicular to the horizontal top plate (131) which measures from 10° to 35°. The exterior primary face (P2) forms a second cutting angle ($\gamma$) with the same plane, measuring from 25° to 60°. Each of these primary faces (P1, P2) extend upwardly towards the horizontal top plate (131) from one longitudinal end edge of the micro flat face (M) to form the V-shaped profile of the cutting surface (130). In continuation of the primary faces (P1, P2), two secondary faces (S1, S2), namely an interior secondary face (S1) oriented towards the interior of the knife pressure box (13) enclosure and an exterior secondary face (S2) oriented towards the exterior of the knife pressure box (13) enclosure, extend upwardly towards the horizontal top plate (131). The interior secondary face (S1) forms a third cutting angle (α) with the plane mentioned above, which measures from 0° to 10°. The exterior secondary face (S2) forms a fourth cutting angle (β) with the same plane, measuring from 15° to 35°. However, when α = 0°, β measures from 25° to 35°.

The third cutting angle (α) is 0°, when some constructive elements of the pressure box (13) such as flange clamps cannot be disposed inside the forming perimeter. A third cutting angle (α) measuring more than 10° would not be advantageous in view of the decreased size benefit of the mould, because a minimum distance is required between the knife pressure box's (13) sealing contour and an exterior contour of a top zone (92d) of the supporting block (92) which is situated below the cutting surface (130). If the fourth cutting angle (β) is below 15° or below 25° (when α = 0°), the knife pressure box (13) gets thinner in the area defined by the third and fourth cutting angles (α, β). Usually, thinning a knife involves reducing the width of the blade behind the primary edge from a cross sectional geometry perspective. Thinning a knife is not sharpening. Thinning is a means to regain the performance of the knife/cutting surface (130) that may be affected by the thickening process. It can be done periodically. If the fourth cutting angle (β) is above 35°, further re-sharpening of the cutting surface (130) will not be possible in time, because as the cutting surface (130) sharpens, metal is removed from the edge. Although the amount of metal removed is very small, in time, the cutting surface (130) gets thicker and that has an impact on the cutting performance. The first and second cutting angles (δ, γ) are in direct relation to the third and fourth cutting angles (α, β).

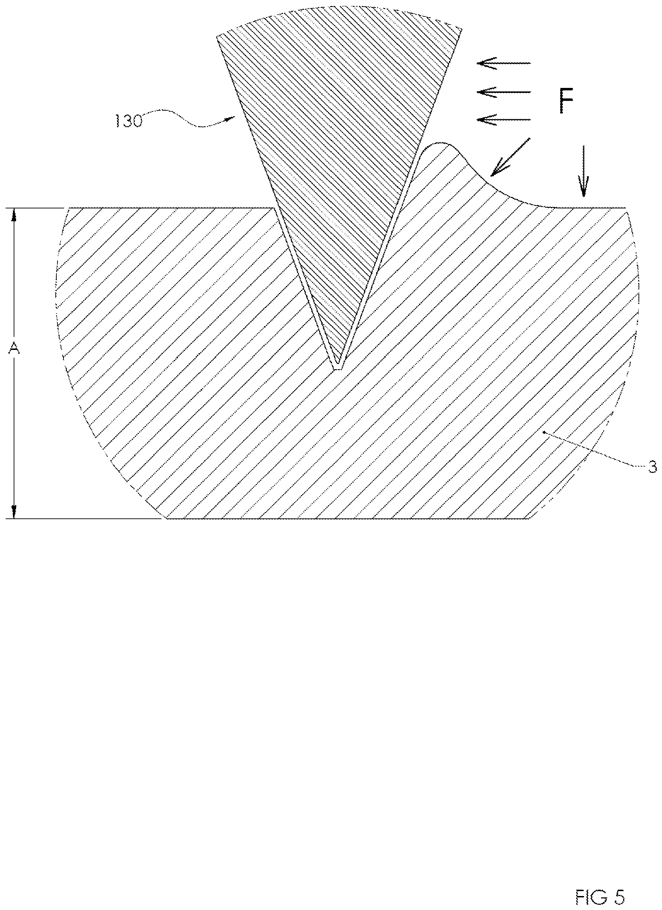

The micro flat face (M) of the cutting surface (130) is positioned such that when the knife pressure box (13) is pressed against the preheated thin-gauge thermoplastic sheet (3), the cutting surface (130) partially penetrates the preheated thin-gauge thermoplastic sheet (3) in order to form a seal around the knife pressure box (13). The cutting surface (130) penetrates only from 30% to 70% of the thickness (A) of the preheated thin-gauge thermoplastic sheet (3). Due to the fact that the sheet (3) is a flexible material, the partially trimmed zone inside the knife pressure box's (13) perimeter is pushed by the forming pressure force (F) to the inner side of the cutting surface (130), naturally conducting the sealing (similarly where an O-ring or a flexible element like rubber, seals) as seen in fig. 5.

Each supporting block (92) which is situated below the cutting surface (130) of the end and side plates (132, 133) has a top zone (92d) made from hardened tool steel, preferably, a high Carbon, high chromium cold work tool steel, more preferably selected from a group consisting of X210Cr12(W1.2080), X155CrMoV12(W1.2379) with a hardness of about 56 to 60 HRC. The choice of these preferred materials for the top zone (92d) of the supporting block (92) which is situated below the cutting surface (130) is due to the fact that the knife pressure box (13) exerts a large force concentrated on a very small surface. If the top zone (92d) is made from another type of material with low resistance to impact and low compressive strength, such as a conventional supporting block (92) made from Duralumin, the thermoforming machine must be replaced or repaired with higher costs.

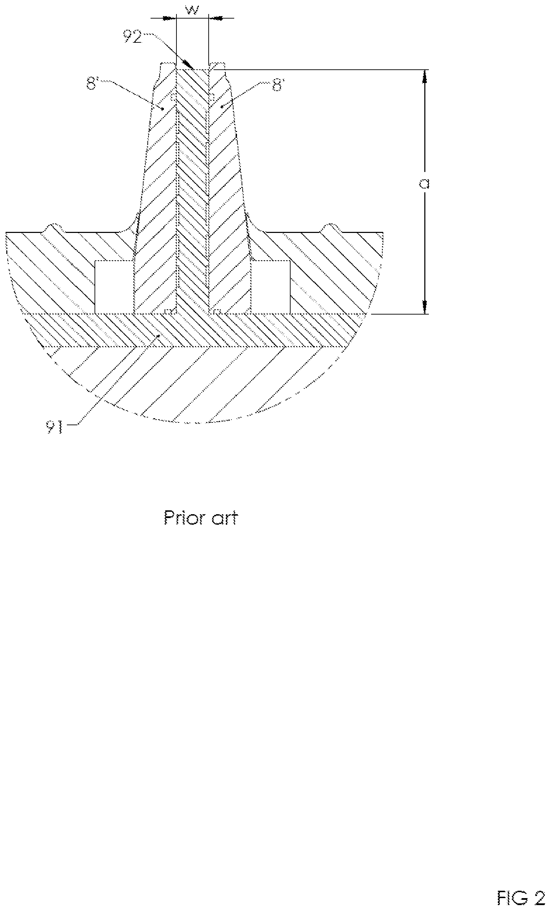

The width (w) of the conventional supporting block (92), as shown in fig. 2, is usually calculated as 20-25% of the total height (a) of the supporting block. Preferably, each supporting block (92), situated below the cutting surface (130) of the knife pressure box (13), according to a preferred embodiment of the invention, has a reduced width compared to a conventional supporting block (92) (as seen in fig. 2), such that a distance measured between an exterior contour of the top zone (92d) of the supporting blocks (92) situated below the cutting surface (130) and an adjacent thermoformed product's trim contour is from 7.5 mm to 7.8 mm. This ensures a reduced size of the mould and thus, a reduced scrap rate.

Preferably, the cutting surface (130) is positioned such that during use, the partial penetration of the preheated thin-gauge thermoplastic sheet (3) is effected at a distance from about 0.8 mm to 2 mm, more preferably of about 1.5 mm, measured between the micro flat face (M) and an adjacent thermoformed product's trim contour. The partial penetration is not made directly on the thermoformed product's trim contour because in the cutting station, when steel-rule dies are used to trim the thermoformed products from the web, inconsistent cutting areas or double cuts of plastic fragments, also called "angel-hairs" would be produced. These hair-like slivers not only make the cut edge unattractive but when the parts/products are used in the food packaging, could contaminate the food being packaged.

2% to 5% efficiency increase can be achieved by decreasing the wall thickness in the pressure box, following some aspects/advantages:

- The steel knife pressure box (13) configuration does not need direct cooling; the contact with the preheated thermoplastic sheet (3) is made on a very small surface compared to the conventional aluminum pressure box (13'), which is only on the cutting surface (130) of the steel knife pressure box (13). The heat exchange rate with the thermoplastic sheet (3) is low, so cooling through an intermediate block is possible; An aluminum pressure box (13') needs direct cooling; the contact with the thermoplastic sheet (3) is made on a much larger surface. The ratio between the values of the contact surface generated by the knife pressure box (13) on the thermoplastic sheet (3) relative to the value of the contact surface generated by a conventional aluminum pressure box (13') on the thermoplastic sheet (3) is about 1:16.

- The steel knife pressure box (13) is much stiffer compared to the same possible aluminum configuration of a conventional pressure box (13'). This fact is related to the following:

a) the forming pressure (from 6 to 8 bar) can deform the aluminum pressure box (especially if the gasket type sealing is used, there is no resistance from the opposite block, on the other side of the sheet (3)), but the steel knife pressure box (13) remains intact, or not affected by multiple elastic deformation due to the nature of the material (hardened tool steel);

b) the configuration of the steel knife pressure box (13) which allows the attachment of the end and side plates (132, 133) to the horizontal top plate (131) by means of fasteners (14), preferably screws (14) of a very small diameter, respectively M4 - M5, adapted to the thickness (t) of these steel knife plates (132, 133). The thickness (t) is from 6.5 to 10 mm. The same Duralumin thread used in a conventional pressure box (13') is much more vulnerable and can be quickly destroyed by repeated movements under the action of force developed during the forming cycle.

With reference to the figures 2, 7-11, another inventive solution provided by the present invention, to the technical problems associated with the known thermoforming moulds is to reconfigure the supporting block's structure (92) and profile between adjacent cavities (8) in order to reduce the distance between adjacent cavity moulds (8') such that the formed products are joined only by a common-edge and then severed on this common-edge by a cutting die to obtain the finished thin-gauge plastic products (2). The inventive solution complies with the technical requirements regarding rigidity, adequate space for the cooling circuit and for the ventilation channels needed for the formed parts/products, easy trimming of the formed products and so on.

Each supporting block (92) has a stepped profile divided into four zones (92a, 92b, 92c, 92d). The first three zones, namely a first (92a), a second (92b) and a third (92c) zone are substantially rectangular shaped zones in a vertical cross section and the fourth zone, namely the top zone (92d) has a substantially isosceles trapezoid shaped, in a vertical cross section. All of these four zones (92a, 92b, 92c, 92d) have a common symmetry axis in a vertical cross section through a plane perpendicular to the base plate (91). Also, the adjacent cavity moulds (8') have a stepped profile, on their exterior surface, which corresponds in a complementary manner to the profile of the supporting block (92) between them.

The first zone (92a) extends perpendicularly from the base plate (91) over a distance (a1), which represents the height of the first zone (92a), calculated as 17-50% of the total height (a) of the supporting block (92). The width of the first zone (92a) is calculated as 24-60% of the total height (a) of the supporting block (92).

The second zone (92b) extends in continuation of the first zone (92a) over a distance (a2), which represents the height of the second zone (92b), calculated as 45-65% of the total height (a) of the supporting block (92). The width of the second zone (92b) is calculated as 7-16% of the total height (a) of the supporting block (92).

The third zone (92c) extends in continuation of the second zone (92b) over a distance (a3), which represents the height of the third zone (92c), calculated as 9-12% of the total height (a) of the supporting block (92). The width of the third zone (92c) is calculated as 5-10% of the total height (a) of the supporting block (92).

The top zone (92d) has a substantially isosceles trapezoid shape and extends in continuation of said third zone (92c) over a distance (a4), which represents the height of the top zone (92d), calculated as 9-12% of the total height (a) of the supporting block (92).

The term "isosceles trapezoid shape" can be defined as a trapezoid with two bases (i.e. parallel sides), in which both legs (i.e. non-parallel sides) have the same length; the base angles have the same measure pair wise and the trapezoid has a line of symmetry through the midpoints of opposite sides. The segment that joins the midpoints of the parallel sides (i.e. top base and bottom base) is perpendicular to them. In the context of the present invention, the term "isosceles trapezoid shape" is limited to a "convex isosceles trapezoid shape".

The top zone (92d) has a bottom base in contact with and having the same width as the third zone (92c), a top base and two legs between the top and bottom bases, and the width of its top base is calculated as 2.5-5% of the total height (a) of the supporting block (92). The both acute angles described by the bottom base with each of the two legs of the top zone (92d) are of about 75° to about 89°. In a preferred embodiment of the present invention, both acute angles are of 81°.

The top zone (92d) has its bottom base in contact with and having the same width as the third zone (92c) and the width of its top base is calculated as 2.5-5% of the total height (a) of the supporting block (92).

The first zone (92a) supports the weight of the second (92b), third (92c) and top (92d) zones. In the region of the second zone (92b), the cooling channels may be provided. The third zone (92c) may be situated above the cooling zone (where the cooling channels may be provided) and above sealing means, preferably O-rings, used for sealing of the second zone (92b).

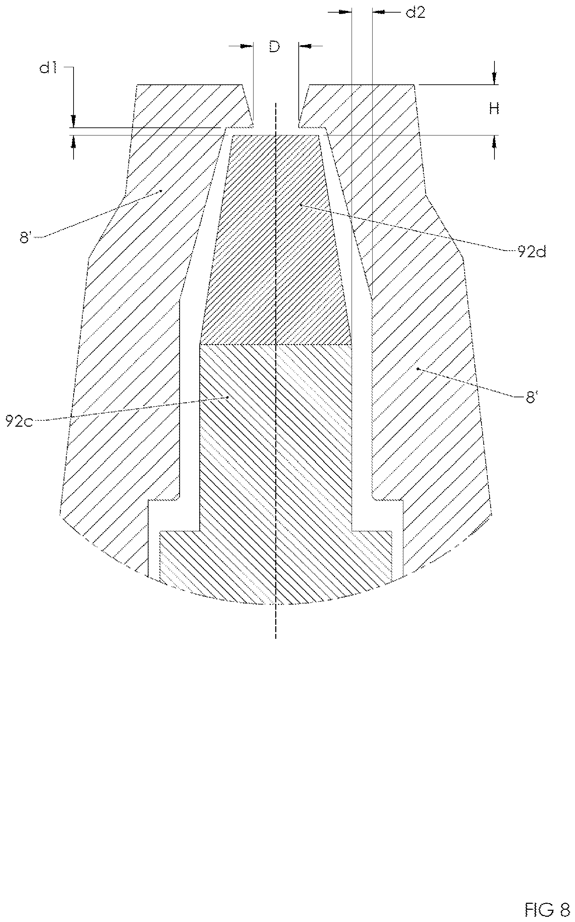

The legs and top base of the top zone (92d) are spaced apart from a top part of adjacent cavity moulds (8') at distances (d1, d2) leaving a space between the top zone (92d) and the top part of adjacent cavity moulds (8') which is used for the ventilation of the formed thermoplastic products (2) inside the cavity moulds (8') (fig. 8).

These distances (d1, d2), are predetermined distances, for example:

$$d1 = 0.02 - 0.2 \text{ mm}$$

$$d2 = 0.15 - 0.4 \text{ mm}$$

wherein:

> d1 represents the distance between the top base of the top zone (92d) and the bottom surface of a top part of an adjacent cavity mould (8') which is extending over the top base;
> d2 represents the distance between a leg of the top zone (92d) and the adjacent wall of a cavity mould (8').

The top rims of two adjacent cavity moulds (8') extend over a part of the top base of the top zone (92d) of the supporting block (92) situated between them, leaving a middle portion of the top base uncovered, with a width (D) of about 1.5 mm to about 6 mm (fig. 8). Preferably, the width (D) of the middle portion is of about 2 to 4 mm and more preferably about 3.2 mm. The width (D) of the middle portion of about 3.2 mm is preferred because it is the ideal dimension for the standard range of thermoplastic sheet (3) thicknesses as long as the distance (H) measured between the top of the top base of the top zone (92d) and the top rim of an adjacent cavity mould (8') is not altered above the standard dimensions for a product's rim (usually about 3 to 5 mm). Also, the distance (D) between two adjacent cavity moulds (8') in the top zone (92d), where the products (2) are formed, cannot be less than:

$$2 \times (A+b) \text{ [mm]},$$

wherein

> A = thickness of a thermoplastic sheet (3) [mm];
> b = a minimum coefficient which is chosen according to the thickness (A) of a thermoplastic sheet (3) [mm];
> b is preferably 0.3 to 1.3 mm for the standard thickness (0.3 to 1.2 mm) of a thin-gauge thermoplastic sheet (3).

A secondary flange (B) of a formed product (2) is a projecting edge of a formed thermoplastic product (2) used for connecting two adjacent formed products (2) in the forming and/or cutting stations of a thermoforming machine.

> B = ½ of the width (D) of the middle portion [mm] and the width of the secondary flange (B) usually cannot be less than (A + b).

This limitation is due to the further alignment of the cutting dies with respect to the formed products (2) inside the cavities (8) in a cutting station of a Form/Cut/Stack thermoforming machine and to the alignment precision of, for example, an auto-centering assembly with a non-zero tolerance.

Two adjacent secondary flanges (B) of formed plastic products (2) are joined together by a common-edge which falls within the middle portion of the top base of the top zone (92d). When the formed plastic products (2) are placed in the cavities (8), for example of a cutting station, the upper tool (11) which comprises a plurality of common-edge cut dies is arranged to sever the adjacent formed plastic products (2) on the common edge, in order to obtain finished thin-gauge plastic products (2). In the Form/Cut/Stack thermoforming machines according to the present invention, the common edges are arranged in the transport direction (x) and/or in a direction (z) perpendicular to the transport direction (x) in the same horizontal plane. The common-edge cut dies are cutting dies with a common-edge/jointed pattern. The design of the common-edge cut dies allows for cut adjacent formed plastic products (2) to be separated from the plastic material (2) more easily and provide for zero trim material between the two patterns. One of the reasons why in a cutting station of a Form/Cut/Stack thermoforming mould, a larger secondary flange (B) of a formed plastic product (2) is needed is related to the cutting tolerances.

The stepped profile of the supporting block (92), according to the present invention, ensures an increased rigidity of the supporting block (92) and the adjacent cavity moulds (8') while allowing a proximal arrangement of the adjacent cavity moulds (8') relative to a central symmetry axis of the supporting block (92) in a vertical cross section through a plane perpendicular to the base plate (91). The increased rigidity also supports the cooling agent's (usually water) pressure acting between the supporting block (92) and the exterior walls of the adjacent cavity moulds (8').

The stepped profile and increased rigidity of the supporting block (92), according to the present invention, enable a standardized execution of the water channels for cooling around the cavity moulds (8'), thus eliminating any water flow rate restriction in the water channels. These cooling water channels may be vertical channels with a medium cross section of about 10 to 20 mm$^2$, placed on the first (92a) and second zones (92b) of the supporting block (92).

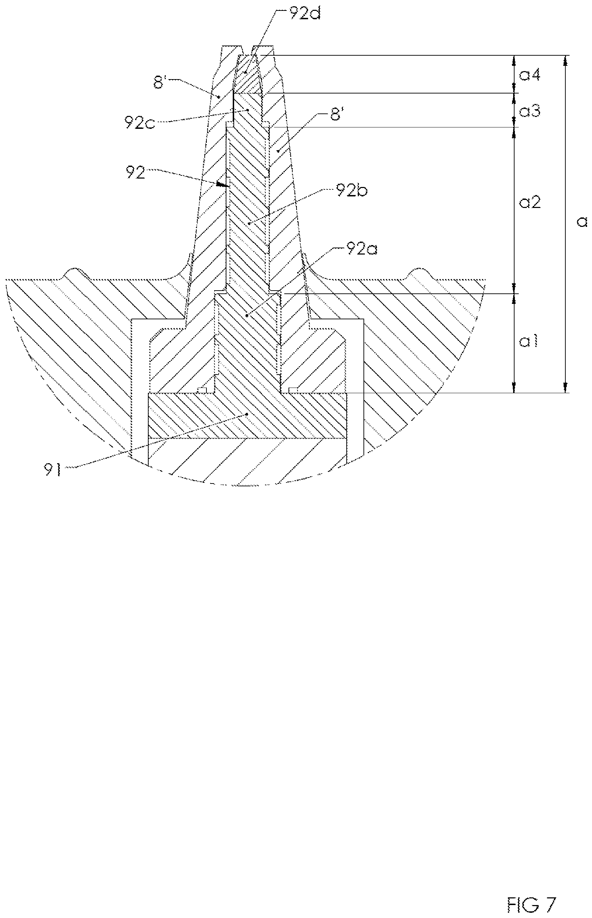

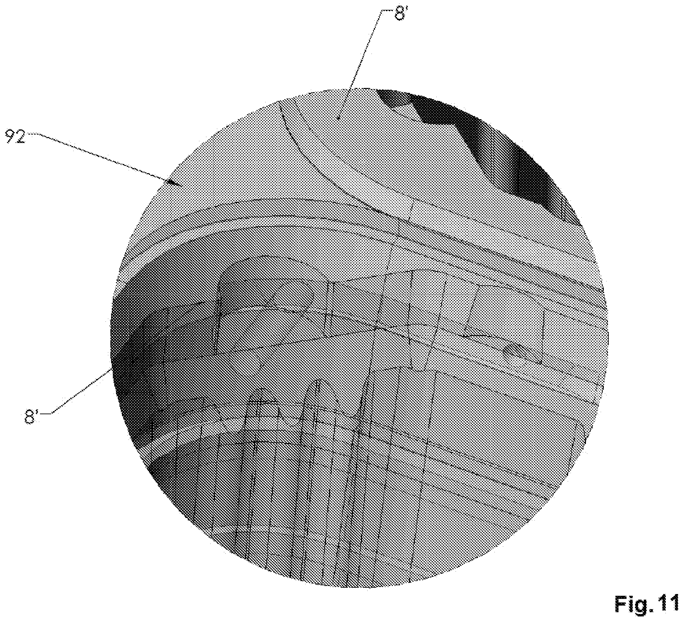

Product ventilation does not suffer due to the stepped re-configuration of the supporting block (92) and of the adjacent cavities (8)/adjacent cavity moulds (8'). The air trapped in the upper areas of the finished products (2) is evacuated for example through ventilation holes and/or channels in the supporting block (92) (figs. 7, 11).

The top zone (92d) of each supporting block (92) which is situated below the cutting surface (130) of the knife pressure box (13) is preferably made from hardened tool steel having a hardness of about 56-60 HRC as mentioned above and the top zone (92d) and the third zone (92c) corresponding to each supporting block (92) which is situated below and inside the periphery of the rectangular parallelepiped enclosure are made from the same material, preferably of an Aluminum alloy selected from a group consisting of 5083, 6082 or 7075 Aluminum alloys.

What has been described and illustrated herein is an example of the disclosure along with some of its optional features. The terms, descriptions and figures used herein are set forth by way of illustration only and are not meant as limitations. The scope of the disclosure is intended to be defined by the following claims.

**Claims**

1. A multi-cavity mould (1) for a thermoforming machine used in the process of high-volume, continuous thermoforming of a plurality of thin-gauge plastic products (2) from a preheated thin-gauge thermoplastic sheet (3) comprising:

    - an upper tool (11) and a lower tool (12) arranged in a cooperating manner; the lower tool (12) comprising:

        - a plurality of cavities (8) for receiving cavity moulds (8') and
        - a plurality of base plates (91) from which a plurality of supporting blocks (92) extend perpendicularly over a predetermined total height (a), situated between adjacent cavities (8) and

    the upper tool (11) comprising:

        ○ a top base plate (4) and
        ○ a plurality of plug moulds (5) arranged in an x-z array and connected in a translational manner to said top base plate (4) by means of driving rods (6) such that said plug moulds (5) are movable in a direction (y) perpendicular to a transport direction (x) of said preheated thin-gauge thermoplastic sheet (3)
    wherein said upper tool (11) further comprises a knife pressure box (13) comprising:

        - a horizontal top plate (131) connected to said top base plate (4);
        - first and second vertical end plates (132) extending orthogonally downwardly from a lower surface of said horizontal top plate (131),
        - first and second vertical side plates (133) extending orthogonally downwardly from said lower surface of said horizontal top plate (131) wherein

    the first and second end plates (132) and the first and second side plates (133) are connected such that the horizontal top plate (131), the first and second end plates (132) and the first and second side plates (133) form a downwardly open rectangular parallelepiped enclosure, **characterized in that**
the first and second end plates (132) and the first and second side plates (133) are made from tool steel with a thickness (t) measured from 6.35 mm to 10 mm and have a cutting surface (130) defined along an orthogonally downwardly projecting end of said end and side plates (132, 133) wherein

    - said cutting surface (130) has a substantially V-shaped profile comprising a micro flat face (M) with a width from 0.02 mm to 0.1 mm and is positioned such that when said knife pressure box (13) is pressed against the preheated thin-gauge thermoplastic sheet (3), the cutting surface (130) partially penetrates the preheated thin-gauge thermoplastic sheet (3) in order to form a seal around the knife pressure box (13) by pressing a zone of said thermoplastic sheet (3) which was partially trimmed and which is situated inside the rectangular parallelepiped enclosure against the cutting surface (130).

2. A multi-cavity mould (1) according to claim 1, wherein each supporting block (92) which is situated below said cutting surface (130) of said end and side plates (132, 133) has a top zone (92d) made from hardened tool steel.

3. A multi-cavity mould (1) according to claim 1 or 2, wherein said cutting surface (130) further comprises:

    - an interior primary face (P1) which forms a first cutting angle ($\delta$) with a plane perpendicular to said horizontal top plate (131), measuring from 10° to 35°;
    - an exterior primary face (P2) which forms a second cutting angle ($\gamma$) with a plane perpendicular to said horizontal top plate (131), measuring from 25° to 60° wherein each of said primary faces (P1, P2) extend upwardly towards said horizontal top plate (131) from one longitudinal end edge of said micro flat face (M);
    - an interior secondary face (S1) which forms a third cutting angle ($\alpha$) with a plane perpendicular to said horizontal top plate (131), measuring from 0° to 10°;
    - an exterior secondary face (S2) which forms a fourth cutting angle ($\beta$) with a plane perpendicular to said horizontal top plate (131), measuring from 15° to 35° and complying with the following condition:

        when $\alpha = 0°$, $\beta$ measures from 25° to 35° and

wherein each of said secondary faces (S1, S2) extend upwardly towards said horizontal top plate (131) in continuation of said corresponding primary faces (P1, P2).

4. A multi-cavity mould (1) according to the preceding claims wherein the first and second end plates (132) and the first and second side plates (133) have an equal thickness (t), preferably of 6.35 mm.

5. A multi-cavity mould (1) according to the preceding claims, wherein the first and second end plates (132) and the first and second side plates (133) are preferably made from the same material, preferably a high Carbon, high chromium cold work tool steel, more preferably selected from a group consisting of X210Cr12(W1.2080), X155CrMoV12(W1.2379) with a hardness of about 54 to 56 HRC.

6. A multi-cavity mould (1) according to claims 2-5, wherein said top zone (92d) of each supporting block (92) which is situated below said cutting surface (130) is preferably made from a high Carbon, high chromium cold work tool steel, more preferably selected from a group consisting of X210Cr12(W1.2080), X155CrMoV12(W1.2379) with a hardness of about 56 to 60 HRC.

7. A multi-cavity mould (1) according to the preceding claims, wherein said horizontal top plate (131) is preferably made from a medium carbon steel, more preferably C45 (W1.0503) with a hardness of about 55 HRC.

8. A multi-cavity mould (1) according to claims 2-7 wherein each supporting block (92) which is situated below said cutting surface (130) has a reduced width such that a distance measured between an exterior contour of the top zone (92d) of said supporting blocks (92) situated below said cutting surface (130) and an adjacent thermoformed product's trim contour is preferably from 7.5 mm to 7.8 mm.

9. A multi-cavity mould (1) according to the preceding claims wherein said cutting surface (130) is positioned such that during use it partially penetrates said preheated thin-gauge thermoplastic sheet (3) at a distance measured between said micro flat face (M) and an adjacent thermoformed product's trim contour preferably from about 0.8 mm to 2 mm, more preferably of about 1.5 mm.

10. A multi-cavity mould (1) according to the preceding claims wherein the first and second end plates (132) and the first and second side plates (133) are connected to the horizontal top plate (131) preferably by fastening *means (14), more preferably by screws of M4* (about 4 mm diameter) or M5 (about 5 mm diameter) type.

11. A multi-cavity mould (1) according to the preceding claims wherein said horizontal top plate (131) comprises a plurality of window cut-outs (51) arranged in an x-z array, said window cut-outs (51) being dimensioned and positioned such as, during use, each plug mould (5) of the plurality of plug moulds (5) passes through a corresponding window cut-out (51) of the plurality of window cut-outs (51).

12. A multi-cavity mould (1) according to any of the preceding claims, wherein the upper tool (11) and the lower tool (12) are being operable to simultaneously form a plurality of thin-gauge plastic products (2) in corresponding cavity moulds (8') arranged inside the cavities (8) of said lower tool (12) in an x-z array and wherein each of said supporting block (92) has a stepped profile comprising a first (92a), a second (92b), a third (92c) substantially rectangular shaped zones in a vertical cross section and said top zone (92d) having a substantially isosceles trapezoid shape in a vertical cross section with a common symmetry axis in a vertical cross section through a plane perpendicular to said base plate (91) wherein:

   - said first zone (92a) extends perpendicularly from said base plate (91) over a distance (a1) calculated as 17-50% of the total height (a) of said supporting block (92) and the width of the first zone (92a) is calculated as 24-60% of the total height (a) of said supporting block (92);
   - said second zone (92b) extends in continuation of said first zone (92a) over a distance (a2) calculated as 45-65% of the total height (a) of said supporting block (92) and the width of the second zone (92b) is calculated as 7-16% of the total height (a) of said supporting block (92);
   - said third zone (92c) extends in continuation of said second zone (92b) over a distance (a3) calculated as 9-12% of the total height (a) of said supporting block (92) and the width of the third zone (92c) is calculated as 5-10% of the total height (a) of said supporting block (92);
   - said substantially isosceles trapezoid shaped top zone (92d) extends in continuation of said third zone (92c) over a distance (a4) calculated as 9-12% of the total height (a) of said supporting block (92), wherein the top zone (92d) has a bottom base in contact with and having the same width as the third zone (92c), a top base and two legs of equal length between the top and bottom bases and the width of the top base of said top zone (92d) is calculated as 2.5-5% of the total height (a) of said supporting block (92) and preferably both acute base angles of said top zone (92d) measure about 75° to about 89° and

wherein in said lower tool (12):

- the legs and top base of said top zone (92d) are spaced apart from a top part of adjacent cavity moulds (8') at predetermined distances (d1, d2) and
- top rims of two adjacent cavity moulds (8') extend over a part of the top base of the top zone (92d) of the supporting block (92) situated between them, leaving a middle portion of the top base uncovered, with a width (D) of about 1.5 mm to about 6 mm.

13. A multi-cavity mould (1) according to claim 12 wherein said width (D) of the middle portion is preferably about 2 to 4 mm, more preferably about 3.2 mm.

14. A Form, Cut and Stack thermoforming apparatus comprising a multi-cavity mould (1) according to claims 12-13 as a forming station wherein said substantially isosceles trapezoid shaped top zone (92d) and said third zone (92c) corresponding to each supporting block (92) which is situated below and inside the periphery of said rectangular parallelepiped enclosure are made from the same material, preferably an Aluminum alloy selected from a group consisting of 5083, 6082 or 7075 Aluminum alloys.


**Patentansprüche**

1. Mehrfachform (1) für eine Thermoformmaschine, die im Verfahren des hochvolumigen, kontinuierlichen Thermoformens einer Vielzahl von dünnwandigen Kunststoffprodukten (2) aus einer vorgewärmten dünnwandigen thermoplastischen Folie (3) verwendet wird, umfassend:

- ein Oberwerkzeug (11) und ein Unterwerkzeug (12), die zusammenwirkend angeordnet sind; das Unterwerkzeug (12) umfassend:

- eine Vielzahl von Hohlräumen (8) zur Aufnahme von Hohlraumformen (8') und
- eine Vielzahl von Grundplatten (91), von denen sich eine Vielzahl von Stützblöcken (92) senkrecht über eine vorbestimmte Gesamthöhe (a) erstrecken, die sich zwischen benachbarten Hohlräumen (8) befinden, und

das Oberwerkzeug (11) umfassend:

∘ eine obere Grundplatte (4) und
∘ eine Vielzahl von Stopfenformen (5), die in einer x-z-Anordnung angeordnet sind und mit der oberen Grundplatte (4) mittels Antriebsstangen (6) translatorisch verbunden sind, so dass die Stopfenformen (5) in einer Richtung (y) senkrecht zu einer Transportrichtung (x) der vorgewärmten dünnen thermoplastischen Folie (3) beweglich sind

wobei

das Oberwerkzeug (11) ferner ein Messerdruckgehäuse (13) umfasst, der Folgendes umfasst:

- eine horizontale Oberplatte (131), die mit der oberen Grundplatte (4) verbunden ist;
- eine erste und eine zweite vertikale Endplatte (132), die sich orthogonal von einer unteren Fläche der horizontalen Oberplatte (131) nach unten erstrecken,
- eine erste und eine zweite vertikale Seitenplatte (133), die sich orthogonal von der unteren Fläche der horizontalen Oberplatte (131) nach unten erstrecken, wobei

die erste und die zweite Endplatte (132) und die erste und die zweite Seitenplatte (133) so verbunden sind, dass die horizontale Oberplatte (131), die erste und die zweite Endplatte (132) und die erste und die zweite Seitenplatte (133) ein nach unten offenes, rechteckiges Parallelepiped-Gehäuse bilden, **dadurch gekennzeichnet, dass**

die erste und die zweite Endplatte (132) und die erste und die zweite Seitenplatte (133) aus Werkzeugstahl mit einer Dicke (t) von 6.35 mm bis 10 mm hergestellt sind und eine Schneidfläche (130) aufweisen, die entlang eines orthogonal nach unten herausragenden Endes der End- und Seitenplatten (132, 133) definiert ist, wobei

- die Schneidfläche (130) ein im Wesentlichen V-förmiges Profil aufweist, das eine flache Mikrostirnfläche (M) mit einer Breite von 0.02 mm bis 0.1 mm aufweist und so angeordnet ist, dass, wenn das Messerdruckgehäuse (13) gegen die vorgewärmte dünnwandige thermoplastische Folie (3) gepresst wird, die Schneidfläche (130) teilweise in die vorgewärmte dünnwandige thermoplastische Folie (3) eindringt, um eine Dichtung um das Messerdruckgehäuse (13) herum zu bilden, indem ein Bereich der thermoplastischen Folie (3), der teilweise beschnitten wurde und der sich innerhalb des rechteckigen Parallelepiped-Gehäuses befindet, gegen die Schneidfläche (130) gepresst wird.

2. Mehrfachform (1) nach Anspruch 1, wobei jeder Stützblock (92), der sich unterhalb der Schneidfläche (130) der End- und Seitenplatten (132, 133) befindet, einen oberen Bereich (92d) aus gehärtetem Werkzeugstahl aufweist.

3. Mehrfachform (1) nach Anspruch 1 oder 2, die Schneidfläche (130) ferner umfassend:

- eine innere primäre Stirnfläche (P1), die einen ersten Schnittwinkel ($\delta$) mit einer Ebene senkrecht zu der horizontalen Oberplatte (131) bildet, der zwischen 10° und 35° liegt;
- eine äußere primäre Stirnfläche (P2), die einen zweiten Schnittwinkel ($\gamma$) mit einer Ebene senkrecht zu der horizontalen Oberplatte (131) bildet, der zwischen 25° und 60° liegt, wobei

jede der primären Stirnflächen (P1, P2) sich von einer Längsendkante der flachen Mikrostirnfläche (M) nach oben in Richtung der horizontalen Oberplatte (131) erstreckt;

- eine innere sekundäre Stirnfläche (S1), die einen dritten Schnittwinkel ($\alpha$) mit einer Ebene senkrecht zu der horizontalen Oberplatte (131) bildet, der zwischen 0° und 10° liegt;
- eine äußere sekundäre Stirnfläche (S2), die einen vierten Schnittwinkel ($\beta$) mit einer Ebene senkrecht zu der horizontalen Oberplatte (131) bildet, der zwischen 15° und 35° liegt und der folgenden Bedingung entspricht:

wenn $\alpha$ = 0°, liegt $\beta$ zwischen 25° und 35° und
wobei sich jede der sekundären Stirnflächen (S1, S2) in Fortsetzung der entsprechenden primären Stirnflächen (P1, P2) nach oben in Richtung der horizontalen Oberplatte (131) erstreckt.

4. Mehrfachform (1) nach einem der vorhergehenden Ansprüche, wobei die erste und zweite Endplatte (132) und die erste und zweite Seitenplatte (133) eine gleiche Dicke (t), vorzugsweise von 6.35 mm, aufweisen.

5. Mehrfachform (1) nach einem der vorhergehenden Ansprüche, wobei die erste und die zweite Endplatte (132) und die erste und die zweite Seitenplatte (133) vorzugsweise aus demselben Material hergestellt sind, vorzugsweise aus einem Kaltwerkzeugstahl mit hohem Kohlenstoffgehalt und hohem Chromgehalt, der vorzugsweise aus einer Gruppe ausgewählt ist, die aus X210Cr12(W1.2080), X155CrMoV12(W1.2379) mit einer Härte von etwa 54 bis 56 HRC besteht.

6. Mehrfachform (1) nach einem der Ansprüche 2 bis 5, wobei der obere Bereich (92d) jedes Stützblocks (92), der sich unterhalb der Schneidfläche (130) befindet, vorzugsweise aus einem Kaltwerkzeugstahl mit hohem Kohlenstoffgehalt und hohem Chromgehalt hergestellt ist, der vorzugsweise aus einer Gruppe ausgewählt ist, die aus X210Cr12(W1.2080), X155CrMoV12(W1.2379) mit einer Härte von etwa 56 bis 60 HRC besteht.

7. Mehrfachform (1) nach einem der vorhergehenden Ansprüche, wobei die horizontale Oberplatte (131) vorzugsweise aus einem Stahl mit mittlerem Kohlenstoffgehalt, insbesondere C45 (W1.0503), mit einer Härte von etwa 55 HRC hergestellt ist.

8. Mehrfachform (1) nach einem der Ansprüche 2 bis 7, wobei jeder Stützblock (92), der sich unterhalb der Schneidfläche (130) befindet, eine reduzierte Breite aufweist, so dass ein Abstand, gemessen zwischen einer Außenkontur des oberen Bereichs (92d) der unterhalb der Schneidfläche (130) befindlichen Stützblöcke (92) und der Beschneidkontur eines benachbarten thermogeformten Produkts, vorzugsweise zwischen 7.5 mm und 7.8 mm beträgt.

9. Mehrfachform (1) nach einem der vorhergehenden Ansprüche, wobei die Schneidfläche (130) so positioniert ist, dass sie während des Gebrauchs teilweise in die vorgewärmte dünnwandige thermoplastische Folie (3) in einem Abstand eindringt, der zwischen der flachen Mikrostirnfläche (M) und der Beschneidkontur eines benachbarten thermogeformten Produkts gemessen wird, vorzugsweise von etwa 0.8 mm bis 2 mm, besonders bevorzugt von etwa 1.5 mm.

10. Mehrfachform (1) nach einem der vorhergehenden Ansprüche, wobei die erste und zweite Endplatte (132) und die erste und zweite Seitenplatte (133) mit der horizontalen Oberplatte (131) vorzugsweise durch Befestigungsmittel (14), besonders bevorzugt durch Schrauben des Typs M4 (etwa 4 mm Durchmesser) oder M5 (etwa 5 mm Durchmesser), verbunden sind.

11. Mehrfachform (1) nach einem der vorhergehenden Ansprüche, wobei die horizontale Oberplatte (131) eine Vielzahl von Fensterausschnitten (51) aufweist, die in einer x-z-Anordnung angeordnet sind, wobei die Fensterausschnitte (51) so dimensioniert und positioniert sind, dass während der Verwendung jede Stopfenform (5) der Vielzahl von Stopfenformen (5) durch einen entsprechenden Fensterausschnitt (51) der Vielzahl von Fensterausschnitten (51) hindurchgeht.

12. Mehrfachform (1) nach einem der vorhergehenden Ansprüche, wobei das Oberwerkzeug (11) und das Unterwerkzeug (12) derart betreibbar sind, um gleichzeitig eine Vielzahl von dünnwandigen Kunststoffprodukten (2) in entsprechenden Hohlraumformen (8') zu formen, die innerhalb der Hohlräume (8) des Unterwerkzeugs (12) in einer x-z-Anordnung angeordnet sind, und wobei jeder der Stützblöcke (92) ein gestuftes Profil aufweist, das einen ersten (92a), einen zweiten (92b), einen dritten (92c), im Wesentlichen rechteckig geformte Bereich in einem vertikalen Querschnitt umfasst und der obere Bereich (92d) eine im Wesentlichen gleichschenklig trapezförmige Form in einem vertikalen Querschnitt mit einer gemeinsamen Symmetrieachse in einem vertikalen Querschnitt durch eine Ebene senkrecht zu der Grundplatte (91) aufweist, wobei:

- der erste Bereich (92a) sich senkrecht von der Grundplatte (91) über einer Strecke (a1) erstreckt, die als 17-50% der Gesamthöhe (a) des Stützblocks (92) berechnet ist, und die Breite des ersten Bereichs (92a) als 24-60% der Gesamthöhe (a) des Stützblocks (92) berechnet ist;
- der zweite Bereich (92b) sich in Fortsetzung des ersten Bereichs (92a) über eine Strecke (a2) erstreckt, die als 45-65% der Gesamthöhe (a) des Stützblocks (92) berechnet ist, und die Breite des zweiten Bereichs (92b) als 7-16% der Gesamthöhe (a) des Stützblocks (92) berechnet ist;
- der dritte Bereich (92c) sich in Fortsetzung des zweiten Bereichs (92b) über eine Strecke (a3) erstreckt, die als 9-12% der Gesamthöhe (a) des Stützblocks (92) berechnet ist, und die Breite des dritten Bereichs (92c) als 5-10% der Gesamthöhe (a) des Stützblocks (92) berechnet ist;
- der im Wesentlichen gleichschenklig trapezförmige obere Bereich (92d) sich in Fortsetzung des dritten Bereichs (92c) über eine Strecke (a4) erstreckt, die als 9-12% der Gesamthöhe (a) des Stützblocks (92) berechnet wird, wobei der obere Bereich (92d) eine untere Basis, die mit dem dritten Bereich (92c) in Kontakt ist und die gleiche Breite wie dieser hat, eine obere Basis und zwei Schenkel gleicher Länge zwischen der oberen und der unteren Basis aufweist und die Breite der oberen Basis des oberen Bereichs (92d) als 2.5-5% der Gesamthöhe (a) des Stützblocks (92) berechnet ist und vorzugsweise beide spitzen Basiswinkel des oberen Bereichs (92d) etwa 75° bis etwa 89° messen und

wobei in dem Unterwerkzeug (12):

- die Schenkel und die obere Basis des oberen Bereichs (92d) in vorbestimmten Abständen (d1, d2) von einem oberen Teil benachbarter Hohlraumformen (8') beabstandet sind und
- die oberen Ränder von zwei benachbarten Hohlraumformen (8') sich über einen Teil der oberen Basis des oberen Bereichs (92d) des zwischen ihnen befindlichen Stützblocks (92) erstrecken, wobei ein mittlerer Teil der oberen Basis mit einer Breite (D) von etwa 1.5 mm bis etwa 6 mm unbedeckt bleibt.

13. Mehrfachform (1) nach Anspruch 12, wobei die Breite (D) des mittleren Teils vorzugsweise etwa 2 bis 4 mm, besonders bevorzugt etwa 3.2 mm beträgt.

14. Thermoform-Vorrichtung zum Formen, Schneiden und Stapeln, umfassend eine Mehrfachform (1) nach einem der Ansprüche 12-13 als Formstation, wobei der im Wesentlichen gleichschenklig trapezförmige obere Bereich (92d) und der dritte Bereich (92c), der jedem Stützblock (92) entspricht, der sich unterhalb und innerhalb des Umfangs des rechteckigen Parallelepiped-Gehäuses befindet, aus demselben Material, vorzugsweise einer Aluminiumlegierung, ausgewählt aus einer Gruppe bestehend aus 5083, 6082 oder 7075 Aluminiumlegierungen, hergestellt sind.

**Revendications**

1. Moule à cavités multiples (1) pour une machine de thermoformage utilisée dans le procédé de thermoformage continu à volume élevé d'une pluralité de produits en plastique à faible épaisseur (2) à partir d'une feuille thermoplastique à faible épaisseur préchauffée (3) comprenant:

- un outil supérieur (11) et un outil inférieur (12) agencés de manière coopérante; l'outil inférieur (12) comprenant:

- une pluralité de cavités (8) pour recevoir des moules à cavité (8') et
- une pluralité de plaques de base (91) à partir desquelles une pluralité de blocs de support (92) s'étend perpendiculairement sur une hauteur totale prédéterminée (a), située entre des cavités adjacentes (8) et

l'outil supérieur (11) comprenant:

○ une plaque de base supérieure (4) et
○ une pluralité de moules à bouchon (5) agencés en un réseau x-z et reliés de manière translationnelle à ladite plaque de base supérieure (4) au moyen de tiges d'entraînement (6) de telle sorte que lesdits moules à bouchon (5) sont mobiles dans une direction (y) perpendiculaire à une direction de transport (x) de ladite feuille thermoplastique à faible épaisseur préchauffée (3)

dans lequel

> ledit outil supérieur (11) comprend en outre une boîte de pression de couteau (13) comprenant:
>
>> - une plaque supérieure horizontale (131) reliée à ladite plaque de base supérieure (4);
>> - des première et seconde plaques d'extrémité verticales (132) s'étendant orthogonalement vers le bas à partir d'une surface inférieure de ladite plaque supérieure horizontale (131),
>> - des première et seconde plaques latérales verticales (133) s'étendant orthogonalement vers le bas à partir de ladite surface inférieure de ladite plaque supérieure horizontale (131), dans lequel
>
> les première et seconde plaques d'extrémité (132) et les première et seconde plaques latérales (133) sont reliées de telle sorte que la plaque supérieure horizontale (131), les première et seconde plaques d'extrémité (132) et les première et seconde plaques latérales (133) forment une enceinte parallélépipédique rectangulaire ouverte vers le bas; **caractérisé en ce que** les première et seconde plaques d'extrémité (132) et les première et seconde plaques latérales (133) sont réalisées en acier à outils avec une épaisseur (t) mesurée de 6.35 mm à 10 mm et ont une surface de coupe (130) définie le long d'une extrémité faisant saillie orthogonalement vers le bas desdites plaques d'extrémité et latérales (132, 133), dans lequel
>
>> - ladite surface de coupe (130) a un profil sensiblement en forme de V comprenant une face micro-plate (M) ayant une largeur de 0.02 mm à 0.1 mm et est positionnée de telle sorte que lorsque ladite boîte de pression de couteau (13) est pressée contre la feuille thermoplastique à faible épaisseur préchauffée (3), la surface de coupe (130) pénètre partiellement dans la feuille thermoplastique à faible épaisseur préchauffée (3) afin de former un joint autour de la boîte de pression de couteau (13) en pressant une zone de ladite feuille thermoplastique (3) qui a été partiellement rognée et qui est située à l'intérieur de l'enceinte parallélépipédique rectangulaire contre la surface de coupe (130).

2. Moule à cavités multiples (1) selon la revendication 1, dans lequel chaque bloc de support (92) qui est situé au-dessous de ladite surface de coupe (130) desdites plaques d'extrémité et latérales (132, 133) a une zone supérieure (92d) réalisée en acier à outils durci.

3. Moule à cavités multiples (1) selon la revendication 1 ou 2, dans lequel ladite surface de coupe (130) comprend en outre:

> - une face primaire intérieure (P1) qui forme un premier angle de coupe ($\delta$) avec un plan perpendiculaire à ladite plaque supérieure horizontale (131), mesurant de 10° à 35°;
> - une face primaire extérieure (P2) qui forme un second angle de coupe ($\gamma$) avec un plan perpendiculaire à ladite plaque supérieure horizontale (131), mesurant de 25° à 60°

dans lequel
chacune desdites faces primaires (P1, P2) s'étend vers le haut, vers ladite plaque supérieure horizontale (131) à partir d'un bord d'extrémité longitudinale de ladite face micro-plate (M);

> - une face secondaire intérieure (S1) qui forme un troisième angle de coupe ($\alpha$) avec un plan perpendiculaire à ladite plaque supérieure horizontale (131), mesurant de 0 ° à 10 °;
> - une face secondaire extérieure (S2) qui forme un quatrième angle de coupe ($\beta$) avec un plan perpendiculaire à ladite plaque supérieure horizontale (131), mesurant de 15 ° à 35 ° et respectant la condition suivante:
>
>> lorsque $\alpha$ = 0 °, $\beta$ mesure de 25 ° à 35 ° et dans lequel chacune desdites faces secondaires (S1, S2) s'étend vers le haut, vers ladite plaque supérieure horizontale (131) dans le prolongement desdites faces primaires correspondantes (P1, P2).

4. Moule à cavités multiples (1) selon les revendications précédentes, dans lequel les première et seconde plaques d'extrémité (132) et les première et seconde plaques latérales (133) ont une épaisseur égale (t), de préférence de 6.35 mm.

5. Moule à cavités multiples (1) selon les revendications précédentes, dans lequel les première et seconde plaques d'extrémité (132) et les première et seconde plaques latérales (133) sont de préférence réalisées du même matériau, de préférence un acier à outils travaillé à froid à haute teneur en carbone, à haute teneur en chrome, plus préférablement choisi dans un groupe constitué de X210Cr12(W1.2080), X155CrMoV12(W1.2379) avec une dureté d'environ 54 à 56 HRC.

6. Moule à cavités multiples (1) selon les revendications 2 à 5, dans lequel ladite zone supérieure (92d) de chaque bloc de support (92) qui est située au-dessous de ladite surface de coupe (130) est de préférence réalisée d'un acier à outils travaillé à froid à haute teneur en carbone, à haute teneur en chrome, plus préférablement choisi dans un groupe constitué de X210Cr12(W1.2080), X155CrMoV12(W1.2379) avec une dureté d'environ 56 à 60 HRC.

7. Moule à cavités multiples (1) selon les revendications précédentes, dans lequel ladite plaque supérieure horizontale (131) est de préférence réalisée d'un acier au carbone moyen, plus préférablement C45 (W1.0503) avec une dureté d'environ 55 HRC.

8. Moule à cavités multiples (1) selon les revendications 2 à 7, dans lequel chaque bloc de support (92) qui est situé au-dessous de ladite surface de coupe (130) a une largeur réduite de telle sorte qu'une distance mesurée entre un contour extérieur de la zone supérieure (92d) desdits blocs de support (92) située au-dessous de ladite surface de coupe (130) et un contour de garniture de produit thermoformé adjacent est de préférence de 7.5 mm à 7.8 mm.

9. Moule à cavités multiples (1) selon les revendications précédentes, dans lequel ladite surface de coupe (130) est positionnée de telle sorte que, pendant l'utilisation, elle pénètre partiellement dans ladite feuille thermoplastique à faible épaisseur préchauffée (3) à une distance mesurée entre ladite face micro-plate (M) et un contour de garniture de produit thermoformé adjacent de préférence d'environ 0.8 mm à 2 mm, plus préférablement d'environ 1.5 mm.

10. Moule à cavités multiples (1) selon les revendications précédentes, dans lequel les première et seconde plaques d'extrémité (132) et les première et seconde plaques latérales (133) sont reliées à la plaque supérieure horizontale (131) de préférence par des moyens de fixation (14), plus préférablement par des vis de type M4 (diamètre d'environ 4 mm) ou M5 (diamètre d'environ 5 mm).

11. Moule à cavités multiples (1) selon les revendications précédentes, dans lequel ladite plaque supérieure horizontale (131) comprend une pluralité de découpes de fenêtre (51) agencées dans un réseau x-z, lesdites découpes de fenêtre (51) étant dimensionnées et positionnées telles que, pendant l'utilisation, chaque moule à bouchon (5) de la pluralité de moules à bouchon (5) passe à travers une découpe de fenêtre correspondante (51) de la pluralité de découpes de fenêtre (51).

12. Moule à cavités multiples (1) selon l'une quelconque des revendications précédentes, dans lequel l'outil supérieur (11) et l'outil inférieur (12) sont utilisables pour former simultanément une pluralité de produits en plastique à faible épaisseur (2) dans des moules à cavité correspondants (8') agencés à l'intérieur des cavités (8) dudit outil inférieur (12) dans un réseau x-z et dans lequel chacun dudit bloc de support (92) a un profil étagé comprenant une première (92a), une seconde (92b), une troisième (92c) zones de forme sensiblement rectangulaire dans une section transversale verticale et ladite zone supérieure (92d) ayant une forme sensiblement trapézoïdale isocèle dans une section transversale verticale avec un axe de symétrie commun dans une section transversale verticale à travers un plan perpendiculaire à ladite plaque de base (91) dans lequel:

- ladite première zone (92a) s'étend perpendiculairement à partir de ladite plaque de base (91) sur une distance (a1) calculée comme 17-50% de la hauteur totale (a) dudit bloc de support (92) et la largeur de la première zone (92a) est calculée comme 24-60% de la hauteur totale (a) dudit bloc de support (92);
- ladite seconde zone (92b) s'étend dans le prolongement de ladite première zone (92a) sur une distance (a2) calculée comme 45-65% de la hauteur totale (a) dudit bloc de support (92) et la largeur de la seconde zone (92b) est calculée comme 7-16% de la hauteur totale (a) dudit bloc de support (92);
- ladite troisième zone (92c) s'étend dans le prolongement de ladite deuxième zone (92b) sur une distance (a3) calculée comme 9-12% de la hauteur totale (a) dudit bloc de support (92) et la largeur de la troisième zone (92c) est calculée comme 5-10% de la hauteur totale (a) dudit bloc de support (92);
- ladite zone supérieure de forme sensiblement trapézoïdale isocèle (92d) s'étend dans le prolongement de ladite troisième zone (92c) sur une distance (a4) calculée comme 9-12% de la hauteur totale (a) dudit bloc de support (92), dans lequel la zone supérieure (92d) a une base inférieure en contact avec et ayant la même largeur que la troisième zone (92c), une base supérieure et deux jambes de longueur égale entre les bases supérieure et inférieure et la largeur de la base supérieure de ladite zone supérieure (92d) est calculée comme 2.5-5% de la hauteur totale (a) dudit bloc de support (92) et de préférence les deux angles de base aigus de ladite zone supérieure (92d) mesurent environ 75 ° à environ 89 ° et

dans lequel dans ledit outil inférieur (12):

- les jambes et la base supérieure de ladite zone supérieure (92d) sont espacées d'une partie supérieure de moules à cavité adjacents (8') à des distances prédéterminées (d1, d2) et

- des rebords supérieurs de deux moules à cavité adjacents (8') s'étendent sur une partie de la base supérieure de la zone supérieure (92d) du bloc de support (92) située entre eux, laissant une partie médiane de la base supérieure découverte, avec une largeur (D) d'environ 1.5 mm à environ 6 mm.

13. Moule à cavités multiples (1) selon la revendication 12, dans lequel ladite largeur (D) de la partie médiane est de préférence d'environ 2 à 4 mm, plus préférablement d'environ 3.2 mm.

14. Appareil de thermoformage de formage/coupe/empilement comprenant un moule à cavités multiples (1) selon les revendications 12 à 13 en tant que station de formage, dans lequel ladite zone supérieure de forme sensiblement trapézoïdale isocèle (92d) et ladite troisième zone (92c) correspondant à chaque bloc de support (92) qui est situé au-dessous et à l'intérieur de la périphérie de ladite enceinte parallélépipédique rectangulaire sont réalisées à partir du même matériau, de préférence un alliage d'aluminium choisi dans un groupe constitué des alliages d'aluminium 5083, 6082 ou 7075.

FIG 1

Prior art

DETAIL A

Prior art

FIG 2

FIG 3

DETAIL AB

FIG 4

FIG 5

FIG 6

FIG 7

FIG 8

FIG 9

**Fig. 10**

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105383049 A
- EP 1142691 B1